# EUROPEAN PATENT APPLICATION

(11) **EP 4 446 159 A1**
(43) Date of publication of application: **16.10.2024**
(21) Application number: 23168023.2
(22) Date of filing: 14.04.2023
(51) Int. Cl.: B60L 53/124

(54) **STANDALONE DRIVE OVER MODULE**

(71) Applicant: PULS GmbH, 81925 München (DE)
(72) Inventor: TRITSCHLER, Johannes, 79111 Freiburg (DE)
(74) Representative: Hoffmann Eitle

(57) **Abstract**

The present invention aims at increase of effectiveness and flexibility with respect to transmitter coil installation of wireless power transmission systems. Heretofore, there is provided a standalone drive over module 10 for a transmitter coil of a wireless power transmission system. The standalone drive over module 10 comprises a coil cover 12 with integrated foreign object detection hardware. Further, the standalone drive over module 10 comprises a frame element 14. The frame element 14 encloses an inner space for accommodation of the transmitter coil. Also, the frame element 14 has a positioning face for positioning of the coil cover 12 relative to the transmitter coil 14.

## Description

### FIELD OF INVENTION

The present invention relates to wireless power transmission, and in particular to a standalone drive over module for a transmission coil of a wireless power transmission system.

### BACKGROUND ART

Generally, wireless power transmission systems have a number of advantages over conductive power transmission systems. E.g., for electric vehicles it means that a plug in of a cable is no longer required.

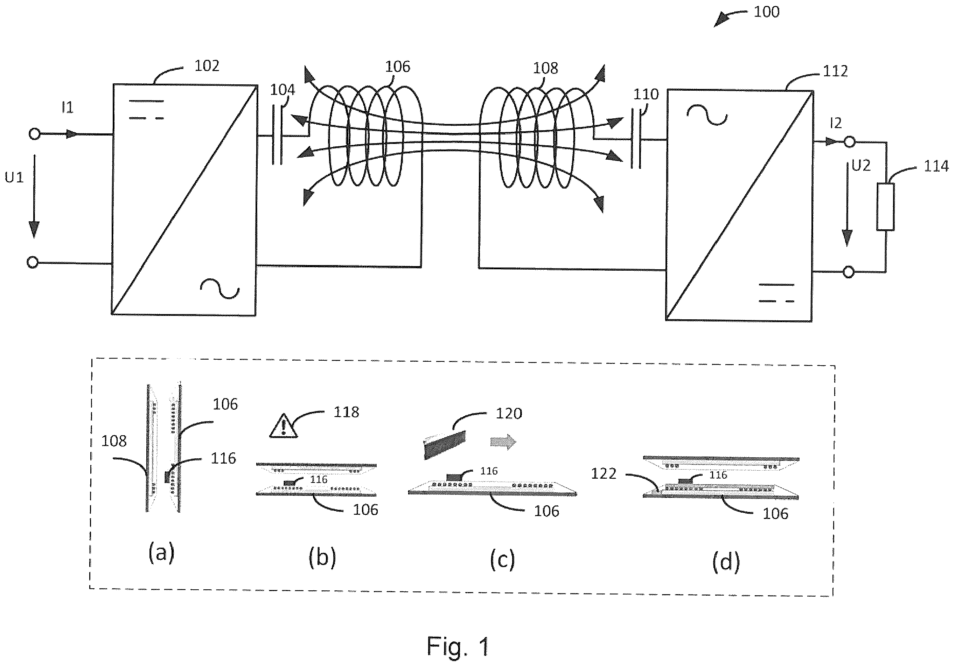

Fig. 1 shows a schematic diagram of a wireless power transmission system 100 as known in the art.

As shown in Fig. 1, the wireless power transmission system 100 comprises at a transmission side a DC/AC converter 102, a transmission side compensation capacitor 104, and a transmitter coil 106 connected in series to the transmission side compensation capacitor 104. The series connection of the transmission side compensation capacitor 104 and the transmitter coil 106 is connected to the output side of the DC/AC converter 102.

As shown in Fig. 1, the wireless power transmission system 100 comprises at a receiving side a receiver coil 108 connected in series to a receiving side compensation capacitor 110. The series connection of the receiver coil 108 and the receiving side compensation capacitor 110 is connected to an input side of an AC/DC converter 112. At the output of the AC/DC converter 112 there is connected a load 114.

Operatively, the DC/AC converter 102 is adapted to receive a DC input signal and to convert it into a transmission side AC signal. The transmission side AC signal is output to the series connection of the transmission side compensation capacitor 104 and the transmitter coil 106 for generation of an oscillating magnetic field. Here, the DC/AC converter 102 is controlled such that the generated magnetic field oscillates at resonant frequency of the series connection of the transmission side compensation capacitor 104 and the transmitter coil 106.

Operatively, the receiver coil 108, when placed in the magnetic field produced by the transmitter coil 106, receives energy transmitted by the transmitter coil 106 through inductive coupling. The inductive coupling leads to the generation of a receiving side AC signal. The AC/DC converter 112 is adapted to convert the receiving side AC signal into a load side DC signal which is then forwarded to the load 114.

Generally, when the wireless power transmission system 100 is operated high power range of, e.g., > 1kW, then the maximum magnetic flux density between the transmitter coil 106 and the receiver coil 108 is in the range of some milli Tesla.

Then, when a foreign object 116 formed of metal or any other conductive material is located in the space between the transmitter coil 106 and the receiver coil 108 eddy currents and/or hysteresis losses - e.g., in ferromagnetic materials-generate high losses and heat up the surroundings of the foreign object 116.

In view of the above, the presence of the foreign object 116 may lead to serious injuries -e.g., when the foreign object 116 is touched by a living object - or may lead to generation of smoke and fire, e.g., when paper covers the foreign object 116.

As shown in Fig. 1 (a), a first counter measure against the impact of foreign objects is a side mounting of the transmission coil 106 and the receiver coil 108. When the transmitter coil 106 and the receiver coil 108 are side mounted a foreign object scenario is avoided per se as a foreign object may never lie on top the transmitter coil 106 or the receiver coil 108.

As shown in Fig. 1 (b), a second counter measure against the impact of foreign objects - applicable to the scenario where the transmitter coil 106 is floor mounted - is the application of adequate warning measures 118. This may be achieved through safety signs or trained personal, however, is only applicable in an industrial manufacturing domain and not in a public domain.

As shown in Fig. 1 (c), a third counter measure against the impact of foreign objects is a mechanical removal of the foreign object, e.g., through a brush 120 attached to an electric vehicle being charged by wireless power transmission prior to start of charging of the electric vehicle.

As shown in Fig. 1 (d), a fourth counter measure against the impact of foreign objects is the application of dedicated foreign object detection hardware 122. However, the integration of foreign object detection hardware 122 results in higher costs and complicates the mechanical assembly of the transmitter coil 106 or the receiver coil 108.

Further to the above it should also be noted that priorto coil installation manufacturers generally have no knowledge on how the coil is installed at the customer site, i.e., whether the customer intends to install coils vertically, horizontally and/or whether the customer intends to apply counter measures against the impact of foreign objects.

### SUMMARY OF INVENTION

In view of the above, the technical object of the present invention is to increase effectiveness and flexibility with respect to transmitter coil installation of wireless power transmission systems.

According to the present invention this object is achieved through a standalone drive over module for a transmitter coil of a wireless power transmission system.

The standalone drive over module comprises a coil cover with integrated foreign object detection hardware.

Further, the standalone drive over module comprises a frame element. The frame element encloses an inner space for accommodation of the transmitter coil. Also, the frame element has a positioning face for positioning of the coil cover relative to the transmitter coil.

### BRIEF DESCRIPTION OF DRAWING

In the following different aspects and examples of the present invention will be explained with reference to the drawing in which:
- Fig. 1: shows a schematic circuit diagram of a wireless power transmission system and foreign object handling as known in the prior art;
- Fig. 2: shows an explosive view of a standalone drive over module and approaches to the relative positioning of the coil cover relative to the frame element according to the present invention;
- Fig. 3: shows different ways of securing the coil cover to the frame element according to the present invention;
- Fig. 4: shows the use of a protective cover and a frame element of a roll-on/roll-off type according to the present invention;
- Fig. 5: shows a first illustrative example of foreign object detection hardware integration into the coil cover according to the present invention;
- Fig. 6: shows a first mechanical structure for foreign object detection hardware integration into the coil cover according to the present invention;
- Fig. 7: shows a second illustrative example of foreign object detection hardware integration into the coil cover according to the present invention;
- Fig. 8: shows a second mechanical structure for foreign object detection hardware integration into the coil cover according to the present invention;
- Fig. 9: shows a third illustrative example of foreign object detection hardware integration into the coil cover according to the present invention;
- Fig. 10: shows a fourth illustrative example of foreign object detection hardware integration into the coil cover according to the present invention;
- Fig. 11: shows examples of coil geometries in support of integrated foreign object detection according to the present invention;
- Fig. 12: shows examples of transmitter and receiver coil geometries in support of active foreign object detection according to the present invention;
- Fig. 13: shows a fifth illustrative example of foreign object detection hardware integration into the coil cover according to the present invention;
- Fig. 14: shows an example of illumination hardware integration into the frame element according to the present invention; and
- Fig. 15: shows an example of illumination hardware integration into the coil cover according to the present invention.

### DETAILED DESCRIPTION OF INVENTION

In the following the present invention will be explained in detail with reference to the drawing. Here, it should be understood that such explanation is related to examples of the present invention only and not binding to the scope of the present invention as defined by the claims. As far as reference is made to specific components of the standalone drive over module this is to be considered as example and for explaining the underlying functionality. Cleary, within the framework of the present invention such components are exchangeable as long as the same functionality is achieved.

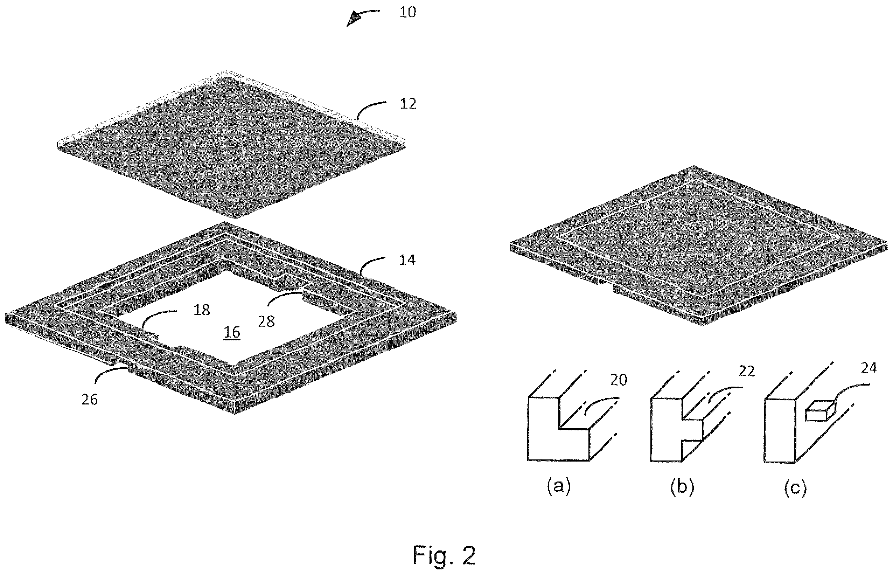

Fig. 2 shows an explosive view of a drive over module 10 and approaches to the relative positioning of the coil cover relative to the frame element according to the present invention.

As shown in Fig. 2, the standalone drive over module 10 for a transmitter coil of a wireless power transmission system comprises a coil cover 12 and a frame element 14 enclosing an inner space 16 for accommodation of the transmitter coil.

As shown in Fig. 2, the frame element 14 and has a positioning face 18 for positioning of the coil cover 12 relative to the frame element 14. It should be noted that according to the present invention there is no restriction on the realization of the positioning face as long as the relative positioning between the coil cover 12 and the frame element 14 is achieved.

As shown in Fig. 2, the positioning face 18 may be an inner circumferential cut-out 20, see Fig. 2 (a), a circumferential bearing face 22 provided at a side wall of the inner space, see Fig. 2 (b) or at least one bearing section 24 provided at the side wall of the inner space, see Fig 2 (c).

Further, the positioning face 18 may also be any suitable combination of the alternatives shown in Fig. 2. Yet another option would be to simply position the coil cover 12 through contact with the inner side face of the frame element 14.

Further, according to the present invention the coil cover 12 may comprise integrated foreign object detection hardware as will be explained in more detail in the following. Here, the integrated foreign object detection hardware may be of any type allowing for metal object detection and/or living object detection.

E.g., the integrated foreign object detection hardware may be of the system parameter detection type to detect electrical system parameters and may comprise at least one sensor to detect non-electrical system parameters.

Also, the integrated foreign object detection hardware may be of the optical detection type and may comprise at least one optical sensor to detect wave-related information or may be of the field-based detection type and may comprise at least one field sensor adapted to detect field-related information.

As shown in Fig. 2, the frame element 14 may comprise at least one lead-in channel 26, 28 for accommodation of wiring to the transmission coil and/or to the integrated foreign object detection hardware of the coil cover 12.

Further, according to the present invention the coil cover 12 may be manufactured from optically transparent material, e.g., from glass material being transparent in support of optical communication. Further, the coil cover 12 may have a printed side opposite to the inner space 16 for accommodation of the transmitter coil for display of printed information.

Further, according to the present invention the frame element 14 may be manufactured from synthetic material, e.g., from plastics or plastic moulding material.

In conclusion, according to the present invention the standalone drive over module may be manufactured independent from the transmitter coil and without any metallic components through exclusive use of non-magnetic and non-conductive materials. From this, there is no impact on the functionality of the transmitter coil of the wireless power transmission system.

Further, the standalone drive over module has a high carrying capacity, e.g., for drive over of industrial trucks, forklifts, AGV, etc. It also has high wear resistance and heat resistance and generally provides high thermal security for the transmitter coil while at the same time being fire proof. Should a foreign object be located on the standalone drive over module burn-in or smoke generation is prevented.

Further, through the combination of the coil cover and the frame element even upon a damage of the coil cover, e.g., a glass breakage of the coil cover, there remains a residual carry capacity of the standalone drive over module. Also, upon service the coil cover may be easily mounted and replaced.

Further, the standalone drive over module according to the present invention is basically maintenance free due to the hard surface of the coil cover even a handling of a service case is possible with low effort and in a very efficient manner. Also, the standalone drive over module is resistant against weather influence, UV radiation, and chemicals.

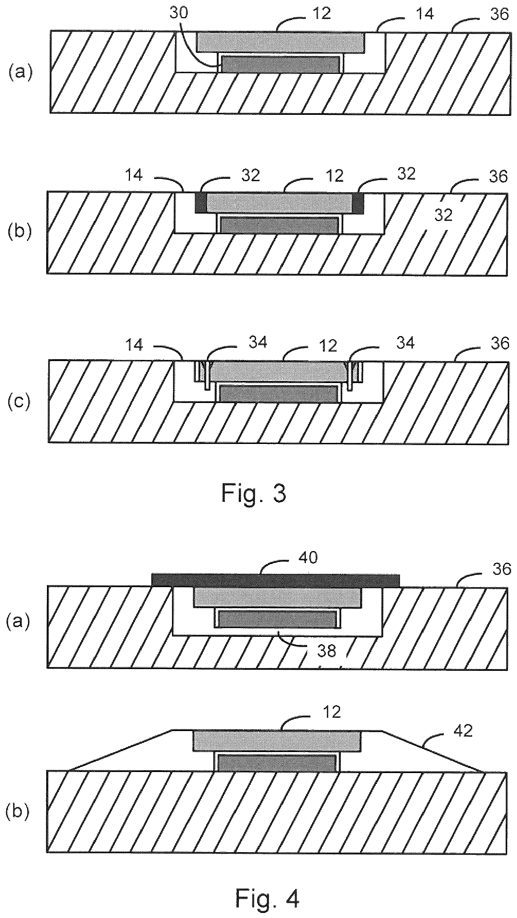

Fig. 3 shows different ways of securing the coil cover to the frame element according to the present invention.

As shown in Fig. 3 (a), the coil cover 12 and the frame element 14 may be secured to each other through form closure once the transmitter coil 30 is placed in the inner space of the standalone drive over module 10. The use of form closure supports ease of maintenance as no extra components are to be handled for the fixation of the coil cover 12 to the frame element 14.

As shown in Fig. 3 (b), the coil cover 12 and the frame element 14 may be secured to each other through an adhesive 32. Compared to the form closure the use of an adhesive increases overall mechanical stability.

As shown in Fig. 3 (c), the coil cover 12 and the frame element 14 may be secured to each other through mechanical attachment 34, e.g., screws. Compared to the form closure the use of a mechanical attachment increases overall mechanical stability and at the same time allows for reversible attachment.

As shown in Fig. 3, the standalone drive over module 10 according to the present invention may be mounted in-floor. Here, the mounting in the floor 36 can be executed, e.g., with screws, with glue, or simply by laying the standalone drive over module 10 into a recess prepared in the floor 36 for accommodation of the standalone drive over module 10. Also, the in-floor installation may be executed in a waterproof manner through silicone isolation between the standalone drive over module 10 and the floor 36.

Fig. 4 shows the use of a protective cover and a frame element of a roll-on/roll-off type according to the present invention.

As shown in Fig. 4 (a), the standalone drive over module 10 may be installed in-floor and the inner space may be provided with a ground plate 38 for waterproof encapsulation of the transmitter coil 30 of the wireless power transmission system. For the in-floor installation and the frame element 14 may have an outer rectangular profile.

As shown in Fig. 4 (a), the standalone drive over module 10 may comprise a non-skid and/or design coating 40 covering the coil cover 12 and/or frame element 14 after installation thereof.

As shown in Fig. 4 (b), the standalone drive over module 10 may be installed on-floor and the frame element 14 may have an outer circumferential ramp profile 42 for roll-on/roll-off of an electrical vehicle to be charged by the wireless power transmission system.

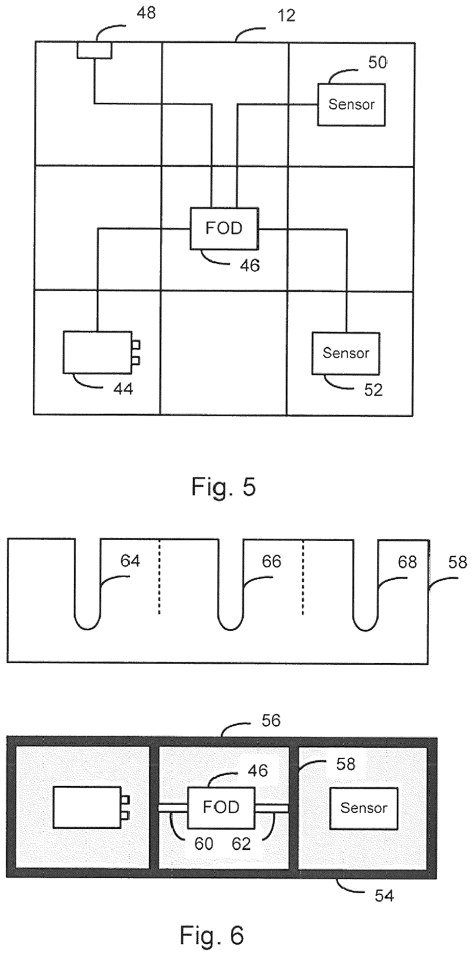

Fig. 5 shows a first illustrative example of foreign object detection hardware integration into the coil cover according to the present invention.

Generally, according to the present invention integrated foreign object detection may be of any type allowing for metal object detection and/or living object detection. Upon foreign object detection the operation of the wireless power transmission system may be stopped automatically prior to generation of significant heat due to the presence of the foreign object. Therefore, the standalone drive over module 10 according to the present invention supports thermal and fire protection functionality.

Further, during normal operation the foreign object detection will not interfere with the wireless power transmission as foreign object detection according to the present invention relies on dedicated integrated hardware as will be explained in the following.

In more detail, different types of integrated foreign object detection which are applicable according to the present invention may be considered as follows:
A first type of integrated foreign object detection is related to system parameter detection in relation to electrical system parameters without dedicated hardware for foreign object detection. In this case, e.g., efficiency, power loss, or current of the wireless power transmission system is monitored and a change of relevant performance parameters serves as indication to presence of a foreign object.

For this first type of integrated foreign object detection no additional hardware is to be integrated into the coil cover 12 as effectiveness and efficiency of the wireless power transmission may be monitored within the control process executed during the wireless power transfer process. Further, the first type of integrated foreign object detection is applicable to low power wireless transmission and to metal object detection.

A second type of integrated foreign object detection is related to system parameter detection in relation to non-electrical system parameters and uses at least one related parameter sensor. The second type of integrated foreign object detection is applicable to low and high power transmission scenarios and further to metal object detection as well as living object detection.

A third type of integrated foreign object detection is related to optical detection and uses at least one optical sensor to detect wave-related information. The third type of integrated foreign object detection is applicable to high power transmission scenarios and further to metal object detection as well as living object detection.

A fourth type of integrated foreign object detection is related to field-based detection type and uses at least one field sensor adapted to detect field-related information. The third type of integrated foreign object detection is applicable to low and high power transmission scenarios and further to metal object detection as well as living object detection.

As shown in Fig. 5, the coil cover 12 may be segmented into different partitions for integration of foreign object detection hardware into the coil cover. The coil cover 12 shown in Fig. 5 is related to the second type of foreign object detection as explained above.

As shown in Fig. 5, the coil cover 12 comprises a battery 44 for supply of electric power to the integrated foreign object detection hardware 46.

Alternatives to the use of a battery may be the use of a connector for supply of electric power to the integrated foreign object detection hardware - either from an external power supply or from stationary electronics of the wireless power transmission system - or inductive power supply through a dedicated power supply coil integrated into the coil cover 12. It should be noted that any such alternative is applicable irrespective of the type of foreign object detection selected for a particular application scenario.

As shown in Fig. 5, the coil cover 12 comprises an interface 48 for exchange of information generated by the integrated foreign object detection hardware 46 and at least one sensor 50, 52 adapted to detect non-electrical system parameters, e.g., weight, pressure, temperature. Thus, any unexpected change of a non-electrical system parameter like high increase of temperature may be monitored by the integrated foreign object detection hardware 46 and reported via the interface 48.

Fig. 6 shows a first mechanical structure for foreign object detection hardware integration into the coil cover 12 according to the present invention.

As shown in Fig. 6, the coil cover 12 comprises a base plate 54, a top plate 56, and a spacing structure 58 extending between the base plate 54 and the top plate 56 so as to form at least one partition for accommodation of the integrated foreign object detection hardware 46.

As shown in Fig. 6, the position of the integrated foreign object detection hardware 46 or any other component integrated into the coil cover may be secured relative to the spacing structure using at least one spacer 60, 62.

As shown in Fig. 6, for the wiring of different components of the integrated foreign object detection hardware the spacing structure 58 may be provided with at least one slot 64, 66, 68 for the pass through of wires across different partitions of the coil cover 12. Also, after installation of the integrated foreign object detection hardware the at least one partition may be mould casted.

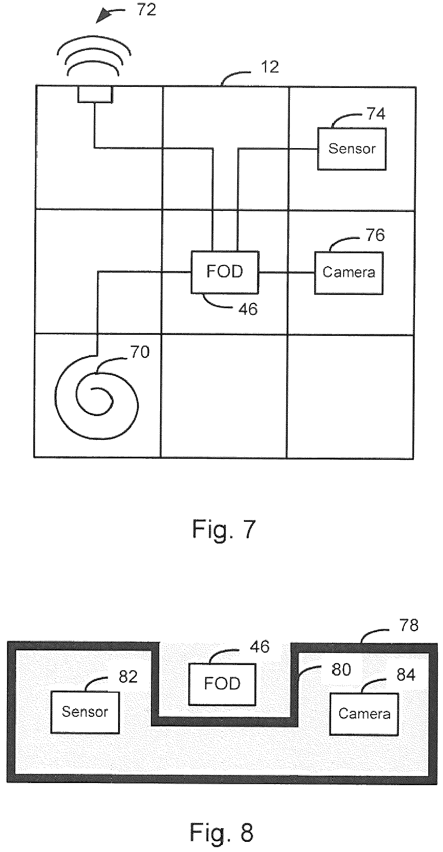

Fig. 7 shows a second illustrative example of foreign object detection hardware integration into the coil cover 12 according to the present invention. The coil cover 12 shown in Fig. 5 is related to the second and third type of foreign object detection as explained above.

As shown in Fig. 7, the coil cover 12 comprises a power receiving coil 70 for supply of electric power to the integrated foreign object detection hardware 46. Also, the coil cover 12 comprises a wireless communication interface 72 for exchange of information generated by the integrated foreign object detection hardware 46.

As shown in Fig. 7, the coil cover 12 comprises a sensor 74 for detection of a non-electrical system parameter in line with the second type of foreign object detection as outlined above. Also, the coil cover 12 comprises a camera 76 for capturing wave-related information according to the third type of foreign object detection as outlined above.

Here, the camera 76 is an example for the provision of at least one optical sensor. Generally, an optical sensor may be realized as an image camera capturing an image of the foreign object device, a thermal camera capturing a thermal fingerprint of the foreign object, an ultrasonic sensor measuring a distance to a pre-determined target point which distance changes upon occurrence of a foreign object, a radar sensor measuring a distance to a pre-determined target point, and/or a plurality of radar antenna transceivers integrated into the circumferential side of the coil cover 12 for distance measurements.

Fig. 8 shows a second mechanical structure for foreign object detection hardware integration into the coil cover 12 according to the present invention.

As shown in Fig. 8, the coil cover 12 is a base sheet 78 having a receptable 80 for the integrated foreign object detection hardware 46. Other foreign object detection components like sensor 74 or camera 76 are pre-embedded into the base sheet 78.

The second mechanical structure for foreign object detection hardware integration into the coil cover 12 allows for pre-configuration foreign object detection hardware, in particular foreign object detection sensor components 82, 84 or power supply components.

Then, depending on the use case the actual foreign object detection hardware using the sensor output information may be freely configured into the receptable 80 of the base sheet 78. Further, all components may be mold casted for increase of mechanical stability of the coil cover 12.

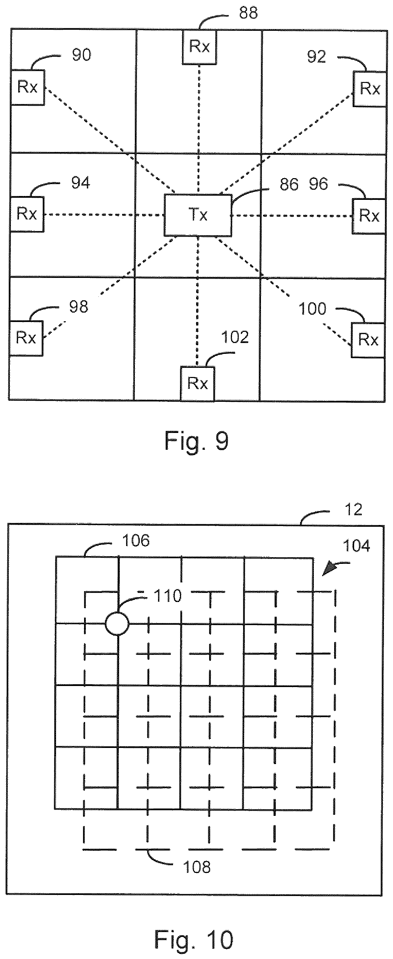

In the following further detailed aspects of foreign object detection relating to foreign object detection hardware integration into the coil cover 12 will be explained with respect to Fig. 9 to Fig. 13.

In more detail, the explanations given relate the integration of foreign object detection hardware into the coil cover 12. Aspects being related to processing of object detection hardware output and related circuitry will not be discussed. Insofar reference is made to Y. Zhang et all, "A review of foreign object detection (FOD) for inductive power transfer systems", eTransportation 1 (2019) 100002 incorporated herein by reference.

Fig. 9 shows a third illustrative example of foreign object detection hardware integration into the coil cover 12 according to the present invention. The coil cover 12 shown in Fig. 9 is related to the third type of foreign object detection as explained above.

A shown in Fig . 9, foreign object detection according to the present invention may rely of measurement of distances by transmitting radar signals from a transmitter 86 to at least one receiver 88 to 102. Here, without existence of a foreign object the distance between the transmitter 86 and the at least one receiver 88 to 102 is known and may be compared with measurement results.

Then, when a foreign object blocks the way between the transmitter 86 and the at least one receiver 88 to 102 there is either no receiver signal or the measured distance varies relative to the pre-known distance so that the existence of a foreign object on the coil cover 12 can be detected.

Fig. 10 shows a fourth illustrative example of foreign object detection hardware integration into the coil cover according to the present invention. The coil cover 12 shown in Fig. 9 is related to the fourth type of foreign object detection as explained above.

As shown in Fig. 10, the integrated foreign object detection hardware comprises a field sensor 104 adapted to detect field-related information. The field sensor 104 comprises at least two detection coil layers 106, 108 which are shifted with respect to each other. The detection coil layers 106, 108 respectively comprise a coil set having at least one coil loop with a predetermined detection coil geometry.

Here, field detection uses the fact that a foreign metal object affects the magnetic field distribution around it.

As shown in Fig. 10, the detection coil layers are placed on top of the coil cover 12 and the inductances and the quality factors of the detection coil layers 106, 108 change with adjacency of a foreign metal object.

Further, detection of small foreign metal objects is of primary importance. However, when the dimensions of detection coils in the detection coil layers 106, 108 are much larger than the foreign metal object the parameter variation of the detection coils will not be significant enough to allow for foreign object detection. Therefore, detection coil layers 106, 106 having detection coils with a size small enough the detect expected foreign metal objects are adapted according to the present invention.

As shown in Fig. 10, the detection coil layers 106, 108 are placed with a relative shift with respect to each other. This allows for elimination of blind spots. Here, blind spots are particular positions like 110 in a detection coil layer where a foreign metal object may have a same impact on adjacent detection coils so that the induced voltage remains zero or close to zero.

As shown in Fig. 10, a solution to the blind spot problem is a relative shift between different detection coil layers so that a blind spot 110 in the first detection coil layer 106 is compensated through a detection coil coverage of the second detection coil layer 108.

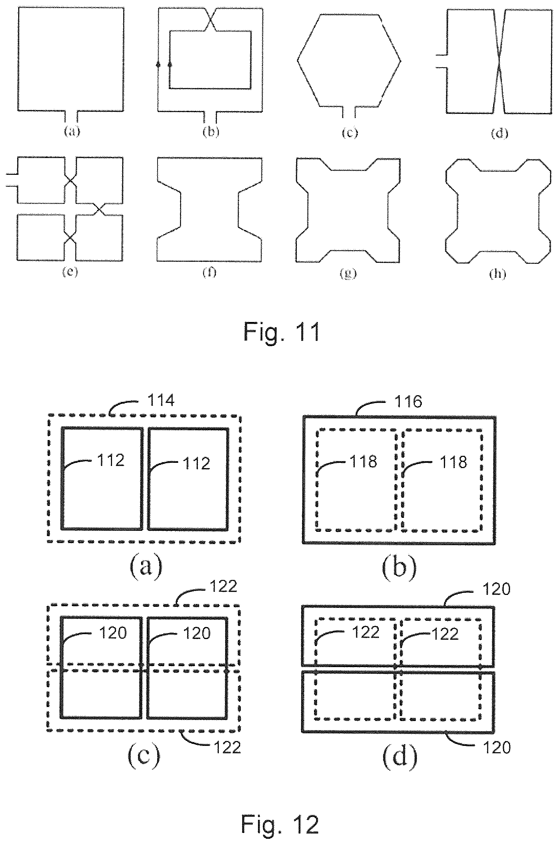

Fig. 11 shows examples of coil geometries in support of integrated foreign object detection according to the present invention.

As outlined above, the detection coil layers 106, 108 respectively comprise a coil set having at least one coil loop with a predetermined detection coil geometry.

As shown in Fig. 11, different detection coil geometries comprise a conventional rectangular coil, see Fig. 11 (a), a rectangular double loop coil, see Fig. 11 (b), a hexagonal coil, see Fig. 11 (c), a double D coil, see Fig. 11 (d), a quadruple D coil, see Fig. 11 (e), a clover leaf-shaped coil of a first type, see Fig. 11 (f), a clover leaf-shaped coil of a second type, see Fig. 11 (g), and/or a clover leaf-shaped coil of a third type, see Fig. 11 (h).

It should be noted that different detection coils may be connected in reverse directions so as to form balanced coils that cancel out an induced voltage to a value of zero in the absence of a foreign object. When a foreign metal object is placed on the balanced coil then the induced voltage would no longer be zero.

Fig. 12 shows examples of transmitter and receiver coil shapes in support of active foreign object detection according to the present invention.

The approaches to foreign object detection discussed so far with respect to Fig. 9 to Fig. 11 are of the passive type, i.e., are only applicable when the wireless power transmission is operative. As explained above, passive foreign object detection uses the magnetic field of the wireless power transmission process to induce voltages of foreign object detection coils.

Fig. 12 shows an alternative to passive foreign object detection which is referenced as active foreign object detection in the following. Here, active foreign object detection is also operative when wireless power transmission is not executed and introduces an extra detection coil acting as a source coil for generation of an induced voltage is the absence of the magnetic field of the wireless power transmission process.

Thus, active foreign object detection mechanism has an independent source coil to generate a magnetic field different from the one of the wireless power transmission process. Overall, active foreign object detection achieves an independent foreign object detection also when wireless power transmission is not executed.

As shown in Fig. 12, for active foreign object detection the at least one field sensor comprises at least one transmitting coil set to generate a magnetic field being different from the power transfer related magnetic field and at least one receiving coil set for detection of the generated magnetic field.

As shown in Fig. 12 (a), the at least one transmitter coil set may be realized as a bipolar coil 112 and the at least one receiver coil set may be realized as a unipolar receiver coil 114.

As shown in Fig. 12 (b), the at least one transmitter coil set may be realized as a unipolar coil 116 and the at least one receiver coil set may be realized as a bipolar receiver coil 118.

As shown in Fig. 12 (c) and (d), the at least one transmitter coil set and the at least one receiver coil set may be realized as perpendicular bipolar coils 120 and 122, respectively.

For the coil arrangements shown in Fig. 12 the transmitter loop and the receiver loop are decoupled by use of a unipolar and a bipolar coil or by use of perpendicular bipolar coils. The voltage induced in the receiver loop is zero upon absence of a foreign object and the otherwise it will unequal to zero.

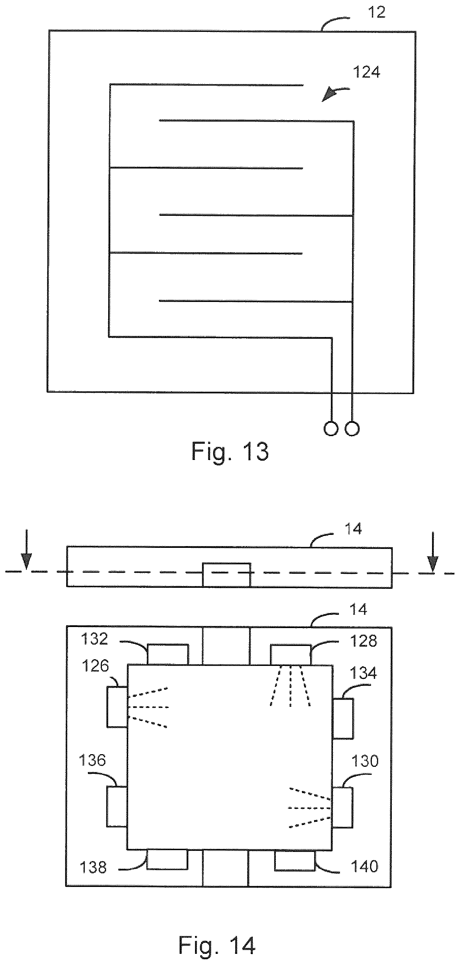

Fig. 13 shows a fifth illustrative example of foreign object detection hardware integration into the coil cover 12 according to the present invention. The coil cover 12 shown in Fig. 13 is related to the fourth type of foreign object detection as explained above.

The fifth illustrative example of foreign object detection hardware is particularly applicable to living object detection. Here, the detection of living objects is mainly for high power applications when a living object is located in the charging area. The fifth illustrative example relates to a field-based detection approach.

Further, as an alternative also ultrasonic or radar sensors are applicable within a wave-based living object detection approach such that a variation of a measured distance serves as an indication towards existence of a living object in the charging area.

As shown in Fig. 13, according to the present invention a comb pattern capacitive sensor 124 serves as integrated foreign object detection hardware for living object detection. Further, as alternative at least one capacitance may be integrated into the circumferential side of the coil cover 12.

Further, both approaches to capacitive foreign object detection rely on the fact that a living object has a negligible effect on the inductance of foreign object detection hardware but affects capacitance around it. Upon presence of a living object the capacitance of the comb pattern capacitive sensor 124 would vary enabling detection of the living object.

Fig. 14 shows an example of illumination hardware integration into the frame element according to the present invention.

As shown in Fig. 14, the frame element 14 comprises at least one lighting element 126, 128, 130 radiating light and/or at least one light reflecting element 132, 134, 136, 138, 140 reflecting light.

Here, the provision of lighting elements and light reflecting elements allows for provision of optical functions and also optical design elements may be integrated easily.

Assuming that the coil cover 12 is manufactured using glass optical highlights may be realized, e.g., LED illumination and/or light reflections.

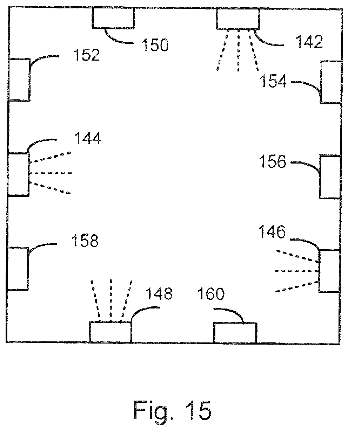

Fig. 15 shows an example of illumination hardware integration into the coil cover according to the present invention.

As shown in Fig. 15, the coil cover 12 comprises at least one lighting element 142, 144, 146, 148 radiating light and/or at least one light reflecting element 150, 152, 156, 158, 160 reflecting light.

As outlined above, the provision of lighting elements and light reflecting elements allows for provision of optical functions and also optical design elements may be integrated easily.

While above the present invention has been described with reference to the drawing it should be noted that clearly the present invention may also be implemented using variations and modifications thereof which will be apparent and can be readily made by those skilled in the art without departing from the scope and spirit of the present invention.

Accordingly, it is not intended that the scope of claims appended hereto is limited to the description as set forth herein but rather that the claims should be construed so as to encompass all features of presentable novelty that preside in the present invention, including all features that would be treated as equivalent thereof by those skilled in the art to which the present invention pertains.

## Claims

1. Standalone drive over module for a transmitter coil of a wireless power transmission system, comprising:
a coil cover with integrated foreign object detection hardware; and
a frame element enclosing an inner space for accommodation of the transmitter coil and having a positioning face for positioning of the coil cover relative to the frame element.

2. Standalone drive over module according to claim 1, comprising a non-skid and/or design coating covering the frame element and/or the coil cover after assembly thereof.

3. Standalone drive over module according to claim 1 or 2, wherein the coil cover and the frame element are secured to each other through form closure.

4. Standalone drive over module according to claim 1 or 2, wherein the coil cover and the frame element are secured to each other through an adhesive.

5. Standalone drive over module according to claim 1 or 2, wherein the coil cover and the frame element are secured to each other through mechanical attachment.

6. Standalone drive over module according to one of the claims 1 to 5, wherein the frame element has a ground plate.

7. Standalone drive over module according to one of the claims 1 to 6, wherein the positioning face is an inner circumferential cut-out, a circumferential bearing face provided at a side wall of the inner space and/or at least one bearing section provided at the side wall of the inner space.

8. Standalone drive over module according to one of the claims 1 to 7, which is installed on-floor and wherein the frame element has an outer circumferential ramp profile for roll-on/roll-off of an electrical vehicle to be charged by the wireless power transmission system.

9. Standalone drive over module according to one of the claims 1 to 7, which is installed in-floor and wherein the frame element has an outer rectangular profile.

10. Standalone drive over module according to one of the claims 1 to 9, wherein the frame element comprises at least one lead-in channel for accommodation of wiring to the transmission coil and/or to the integrated foreign object detection hardware of the coil cover.

11. Standalone drive over module according to one of the claims 1 to 10, wherein the coil cover has a printed side opposite to the inner space for accommodation of the transmitter coil.

12. Standalone drive over module according to one of the claims 1 to 11, wherein the coil cover comprises a connector for supply of electric power to the integrated foreign object detection hardware.

13. Standalone drive over module according to one of the claims 1 to 11, wherein the coil cover comprises a power receiving coil for supply of electric power to the integrated foreign object detection hardware.

14. Standalone drive over module according to one of the claims 1 to 11, wherein the cover comprises a battery for supply of electric power to the integrated foreign object detection hardware.

15. Standalone drive over module according one of the claims 1 to 14, wherein the coil cover comprises a base plate, a top plate, and a spacing structure extending between the base plate and the top plate so as to form at least one partition for accommodation of the integrated foreign object detection hardware.

16. Standalone drive over module according to claim 15, wherein the position of at least one integrated foreign object detection hardware component relative to the spacing structure is secured by at least one spacer.

17. Standalone drive over module according to claim 15 or 16, wherein the at least one partition is mould casted after installation of the integrated foreign object detection hardware.

18. Standalone drive over module according to one of the claims 1 to 14, wherein the coil cover is a base sheet having a receptable for the integrated foreign object detection hardware.

19. Standalone drive over module according to one of the claims 1 to 18, wherein the coil cover has an interface for exchange of information generated by the integrated foreign object detection hardware.

20. Standalone drive over module according to claim 19, wherein the coil cover has a wireless communication interface for exchange of information generated by the integrated foreign object detection hardware.

21. Standalone drive over module according to one of the claims 1 to 20, wherein the integrated foreign object detection hardware is adapted to detected a metal object or is adapted to detect a living object.

22. Standalone drive over module according to one of the claims 1 to 21, wherein the integrated foreign object detection hardware is of the system parameter detection type and adapted to detect electrical system parameters.

23. Standalone drive over module according to one of the claims 1 to 21, wherein the integrated foreign object detection hardware is of the system parameter detection type and comprises at least one sensor adapted to detect non-electrical system parameters.

24. Standalone drive over module according to one of the claims 1 to 21, wherein the integrated foreign object detection hardware is of the optical detection type and comprises at least one optical sensor adapted to detect wave-related information.

25. Standalone drive over module according to one of the claims 1 to 21, wherein the integrated foreign object detection hardware is of the field-based detection type and comprises at least one field sensor adapted to detect field-related information.

26. Standalone drive over module according to claim 25, wherein the at least one field sensor comprises a coil set having at least one coil loop with a predetermined detection coil geometry arranged into at least one detection coil layer.

27. Standalone drive over module according to claim 25, wherein the at least one field sensor comprises at least two detection coil layers which are shifted with respect to each other.

28. Standalone drive over module according to claim 25, wherein the at least one field sensor is of the active type and comprises at least one transmitting coil set to generate a magnetic field being different from the power transfer related magnetic field and at least one receiving coil set for detection of the generated magnetic field.

29. Standalone drive over module according to one of the claims 1 to 21, wherein the integrated foreign object detection hardware is of the field-based detection type and comprises at least one capacitance integrated into the circumferential side of the coil cover or at least one comb pattern capacitive sensor.

## Amended claims

### Amended claims in accordance with Rule 137(2) EPC.

1. Standalone drive over module (10) for a transmitter coil of a wireless power transmission system, comprising:
a coil cover (12) with integrated foreign object detection hardware (46); and
a frame element (14) enclosing an inner space for accommodation of the transmitter coil and having a positioning face (18) for positioning of the coil cover (12) relative to the frame element (14),
wherein the coil cover (12) comprises a power receiving coil (70) for supply of electric power to the integrated foreign object detection hardware (46) or a battery (44) for supply of electric power to the integrated foreign object detection hardware (46).

2. Standalone drive over module (10) according to claim 1, comprising a non-skid and/or design coating (40) covering the frame element (14) and/or the coil cover (12) after assembly thereof.

3. Standalone drive over module (10) according to claim 1 or 2, wherein the coil cover (12) and the frame element (14) are secured to each other through form closure.

4. Standalone drive over module (10) according to claim 1 or 2, wherein the coil cover (12) and the frame element (14) are secured to each other through an adhesive.

5. Standalone drive over module (10) according to claim 1 or 2, wherein the coil cover (12) and the frame element (14) are secured to each other through mechanical attachment.

6. Standalone drive over module (10) according to one of the claims 1 to 5, wherein the frame element (14) has a ground plate (38).

7. Standalone drive over module (10) according to one of the claims 1 to 6, wherein the positioning face (18) is an inner circumferential cut-out (20), a circumferential bearing face (22) provided at a side wall of the inner space and/or at least one bearing section (24) provided at the side wall of the inner space.

8. Standalone drive over module (10) according to one of the claims 1 to 7, which is installed on-floor and wherein the frame element (14) has an outer circumferential ramp profile (42) for roll-on/roll-off of an electrical vehicle to be charged by the wireless power transmission system.

9. Standalone drive over module (10) according to one of the claims 1 to 7, which is installed in-floor and wherein the frame element (14) has an outer rectangular profile.

10. Standalone drive over module (10) according to one of the claims 1 to 9, wherein the frame element (14) comprises at least one lead-in channel (26, 28) for accommodation of wiring to the transmission coil and/or to the integrated foreign object detection hardware (46) of the coil cover (12).

11. Standalone drive over module (10) according to one of the claims 1 to 10, wherein the coil cover (12) has a printed side opposite to the inner space for accommodation of the transmitter coil.

12. Standalone drive over module (10) according one of the claims 1 to 11, wherein the coil cover (12) comprises a base plate (54), a top plate (56), and a spacing structure (58) extending between the base plate (54) and the top plate (56) so as to form at least one partition for accommodation of the integrated foreign object detection hardware (46).

13. Standalone drive over module (10) according to claim 12, wherein the position of at least one integrated foreign object detection hardware component (46) relative to the spacing structure is secured by at least one spacer (60, 62).

14. Standalone drive over module (10) according to claim 12 or 13, wherein the at least one partition is mould casted after installation of the integrated foreign object detection hardware (46).

15. Standalone drive over module (10) according to one of the claims 1 to 11, wherein the coil cover (12) is a base sheet (78) having a receptable for the integrated foreign object detection hardware (46).

16. Standalone drive over module (10) according to one of the claims 1 to 14, wherein the coil cover (12) has an interface (48) for exchange of information generated by the integrated foreign object detection hardware (46).

17. Standalone drive over module according to claim 16, wherein the coil cover (12) has a wireless communication interface (72) for exchange of information generated by the integrated foreign object detection hardware (46).

18. Standalone drive over module (10) according to one of the claims 1 to 17, wherein the integrated foreign object detection hardware is adapted to detect a metal object or is adapted to detect a living object (46).

19. Standalone drive over module (10) according to one of the claims 1 to 18, wherein the integrated foreign object detection hardware (46) is of the system parameter detection type and adapted to detect electrical system parameters.

20. Standalone drive over module (10) according to one of the claims 1 to 18, wherein the integrated foreign object detection hardware (46) is of the system parameter detection type and comprises at least one sensor (74) adapted to detect non-electrical system parameters.

21. Standalone drive over module (10) according to one of the claims 1 to 18, wherein the integrated foreign object detection hardware (46) is of the optical detection type and comprises at least one optical sensor (76) adapted to detect wave-related information.

22. Standalone drive over module (10) according to one of the claims 1 to 18, wherein the integrated foreign object detection hardware (46) is of the field-based detection type and comprises at least one field sensor (104) adapted to detect field-related information.

23. Standalone drive over module (10) according to claim 22, wherein the at least one field sensor (104) comprises a coil set having at least one coil loop with a predetermined detection coil geometry arranged into at least one detection coil layer.

24. Standalone drive over module (10) according to claim 22, wherein the at least one field sensor comprises at least two detection coil layers (106, 108) which are shifted with respect to each other.

25. Standalone drive over module (10) according to claim 22, wherein the at least one field sensor is of the active type and comprises at least one transmitting coil set to generate a magnetic field being different from the power transfer related magnetic field and at least one receiving coil set for detection of the generated magnetic field.

26. Standalone drive over module (10) according to one of the claims 1 to 18, wherein the integrated foreign object detection hardware (46) is of the field-based detection type and comprises at least one capacitance integrated into the circumferential side of the coil cover (12) or at least one comb pattern capacitive sensor.
